# EUROPEAN PATENT APPLICATION

(11) **EP 4 435 953 A1**
(43) Date of publication of application: **25.09.2024**
(21) Application number: 22931445.5
(22) Date of filing: 18.03.2022
(51) Int. Cl.: H01M 50/289, H01M 50/50

(54) **BATTERY CELL AND MANUFACTURING METHOD AND MANUFACTURING SYSTEM THEREFOR, BATTERY, AND ELECTRICAL DEVICE**

(71) Applicant: Contemporary Amperex Technology Co., Limited, Ningde, Fujian 352100 (CN)
(72) Inventor: LIN, Denghua, Ningde, Fujian 352100 (CN); CHEN, Long, Ningde, Fujian 352100 (CN); HUANG, Shoujun, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2022/081730
(87) International publication number: WO 2023/173414

(57) **Abstract**

Embodiments of the present application provide a battery cell and a manufacturing method and manufacturing system therefor, a battery, and an electrical device. The battery cell comprises a housing, a first electrode assembly, a second electrode assembly, a first electrode terminal, and a second electrode terminal. The first electrode assembly and the second electrode assembly are contained in the housing and arranged in a first direction, and the first electrode assembly is insulated from the second electrode assembly. The first electrode terminal is arranged on the housing and electrically connected to the first electrode assembly, so as to conduct electrical energy of the first electrode assembly out. The second electrode terminal is arranged on the housing and electrically connected to the second electrode assembly, so as to conduct electrical energy of the second electrode assembly out. According to the embodiments of the present application, a conductive path of the first electrode assembly and a conductive path of the second electrode assembly can be shortened, internal resistance is reduced, heat generation is reduced, the power of the battery cell is increased, and the charging and discharging performance of the battery cell is improved.

## Description

### TECHNICAL FIELD

The present application relates to the technical field of batteries, and in particular, to a battery cell, a method and a system for manufacturing the battery cell, a battery and an electrical apparatus.

### BACKGROUND

Battery cells are widely used in electronic devices, such as a mobile phone, a notebook computer, an electric bike, an electric vehicle, an electric plane, an electric ship, an electric toy car, an electric toy ship, an electric toy plane, and an electric tool, and the like. The battery cell may include a nickel-cadmium battery cell, a nickel-hydrogen battery cell, a lithium ion battery cell, a secondary alkaline zinc-manganese battery cell, and the like.

In the development of battery technology, how to improve the performance of the battery cell is a research direction in battery technology.

### SUMMARY

The present application provides a battery cell, a method and a system for manufacturing a battery cell, a battery and an electrical apparatus, which can improve the performance of the battery cell.

In a first aspect, embodiments of the present application provide a battery cell including a housing, a first electrode component, a second electrode component, a first electrode terminal, and a second electrode terminal. The first electrode component and the second electrode component are accommodated within the housing and arranged along a first direction, and the first electrode component is insulated from the second electrode component. The first electrode terminal is arranged on the housing and electrically connected to the first electrode component to lead out electrical power from the first electrode component. The second electrode terminal is arranged on the housing and electrically connected to the second electrode component to lead out electrical power from the second electrode component.

In the above solution, the first electrode component and the second electrode component are arranged along the first direction, so that a size of the battery cell along the first direction can be increased, thereby increasing a space utilization rate of the battery cell in the battery and improving an energy density. The first electrode component is insulated from the second electrode component, and a current generated by the first electrode component and a current generated by the second electrode component are respectively led out through the first electrode terminal and the second electrode terminal, and the first electrode component do not need to transmit the current of the second electrode component and the second electrode component do not need to transmit the current of the first electrode component, so that a conductive path of the first electrode component and a conductive path of the second electrode component can be shortened, internal resistance and heat generation can be reduced, power of the battery cell can be increased, thereby improving a charging and discharging performance of the battery cell.

In some implementations, the first electrode component and the second electrode component are spaced apart along the first direction.

In the above solution, the first electrode component and the second electrode component are spaced apart by a certain distance along the first direction, so that a contact possibility of an electrode plate of the first electrode component and an electrode plate of the second electrode component can be reduced, a risk caused by a short circuit can be reduced, thereby improving safety.

In some implementations, the battery cell further includes a first insulating component, and at least a part of the first insulating component is arranged between the first electrode component and the second electrode component, so as to insulate and separate the first electrode component from the second electrode component.

In the above solution, the first insulating component insulates and separates the first electrode component from the second electrode component, and under a condition that the battery cell is subjected to an external impact, the first insulating component can protect the first electrode component and the second electrode component, so that the contact possibility of the electrode plate of the first electrode component and the electrode plate of the second electrode component can be reduced, and the risk caused by the short circuit can be reduced, thereby improving the safety.

In some implementations, the first insulating component is provided with a via, and the via connects a space on a side of the first insulating component facing the first electrode component to a space on a side of the first insulating component facing the second electrode component.

In the above solution, the via can provide a flow channel for the electrolyte, and the electrolyte can flow in spaces on two sides of the first insulating component through the via, so as to improve a consistency of the electrolyte wetting the first electrode component and the second electrode component.

In some implementations, the battery cell further includes a second insulating component coated on an outer side of the first electrode component, so as to separate the first electrode component from at least a part of the housing. The first insulating component is connected to the second insulating component.

In the above solution, the second insulating component can reduce a risk caused by conducting the positive electrode plate and the negative electrode plate of the first electrode component by the housing, thereby improving the safety. The second insulating component is connected to the first insulating component, so as to reduce an amplitude of shaking of the first insulating component under a condition that the battery cell is subjected to the external impact, and reduce a risk caused by failure of the first insulating component, thereby improving the safety.

In some implementations, a space on an outer side of the first electrode component is connected to a space on an outer side of the second electrode component.

In the above solution, the electrolyte may flow between the first electrode component and the second electrode component, so as to improve consistency of the electrolyte wetting the first electrode component and the second electrode component.

In some implementations, the first electrode terminal and the second electrode terminal are installed on two ends of the housing along the first direction, respectively.

In the above solution, a distance between a connection structure between the first electrode terminal and the first electrode component and a connection structure between the second electrode terminal and the second electrode component can be increased, so that a risk caused by interference can be reduced, thereby simplifying an assembling process.

In some implementations, the first electrode terminal includes a first positive electrode terminal electrically connected to a positive electrode plate of the first electrode component and a first negative electrode terminal electrically connected to a negative electrode plate of the first electrode component. The second electrode terminal comprises a second positive electrode terminal electrically connected to a positive electrode plate of the second electrode component and a second negative electrode terminal electrically connected to a negative electrode plate of the second electrode component.

In some implementations, a maximum size of the battery cell along the first direction is from 200mm to 2000mm.

In the above solution, the battery cell has a greater size along the first direction, so that the number of battery cells in the battery is reduced, the number of fixing structures for fixing the battery cells is reduced, and the space utilization rate is improved, thereby increasing the energy density of the battery. The first electrode terminal and the second electrode terminal can respectively transmit a current of the first electrode component and a current of the second electrode component, so that currents flowing between the first electrode component and the second electrode component can be reduced. Even if an overall length of the battery cell is longer, requirements for an internal resistance of the first electrode component and an internal resistance of the second electrode component can be met, and the heat generation is reduced, thereby improving the charging and discharging performance of the battery cell.

In some implementations, the housing includes a housing body and two end caps, the housing body has openings on two ends along the first direction, and the two end caps are configured to cover two openings, respectively. The first electrode terminal and the second electrode terminal are installed on the two end caps, respectively.

In the above solution, two openings and two end caps are arranged, so that assembling of the first electrode component and assembling of the second electrode component are facilitated, thereby simplifying a process for assembling the battery cell.

In some implementations, the housing includes two first side plates arranged oppositely along a second direction perpendicular to the first direction. At least one of the first side plates is provided with a pressure relief mechanism, and the pressure relief mechanism is configured to be actuated under a condition that an internal pressure or temperature of the battery cell reaches a threshold, so as to relieve the internal pressure. Along the second direction, an end portion of the first electrode component facing the second electrode component at least partially overlaps with the pressure relief mechanism, and an end portion of the second electrode component facing the first electrode component at least partially overlaps with the pressure relief mechanism.

In the above solution, the pressure relief mechanism can relieve the internal pressure of the battery cell under a condition that the battery cell has thermal runaway, so that a risk caused by explosion of the battery cell is reduced, thereby improving the safety. Under a condition that the battery cell has the thermal runaway, a high-temperature and high-pressure substance discharged from the end portion of the first electrode component facing the second electrode component and a high-temperature and high-pressure substance discharged from the end portion of the second electrode component facing the first electrode component can quickly act on the pressure relief mechanism, so that the pressure relief mechanism is timely actuated and relieves the internal pressure.

In some implementations, the housing includes two second side plates arranged oppositely along a third direction perpendicular to the first direction and the second direction. An area of the second side plate is greater than an area of the first side plate.

The first electrode component and the second electrode component may expand and press the first side plate and the second side plate in a process of charging, thereby causing the first side plate and the second side plate to deform. The first side plate has a smaller area, so that it receives a less expansive force, and has a less deformation. In the above solution, the pressure relief mechanism is arranged on the first side plate with the smaller area, so that a deformation of the pressure relief mechanism can be reduced, and a risk caused by fatigue failure of the pressure relief mechanism can be reduced, thereby improving the safety.

In some implementations, the first direction is parallel to a length direction of the battery cell.

In some implementations, the first electrode component includes a first electrode plate and a second electrode plate wound around a winding axis parallel to the first direction.

In some implementations, the first electrode component includes a plurality of first electrode plates and a plurality of second electrode plates stacked alternately along a third direction. The third direction is perpendicular to the first direction.

In some implementations, the first electrode component includes a plurality of first electrode plates and a second electrode plate, the second electrode plate is continuously bent and includes a plurality of stacked segments and a plurality of bent segments, the plurality of stacked segments and the plurality of first electrode plates are alternately stacked along a third direction, and each of the plurality of bent segments is configured to connect two adjacent ones of the plurality of stacked segments. The third direction is perpendicular to the first direction.

In a second aspect, embodiments of the present application provide a battery including a plurality of battery cells according to any of the implementations of the first aspect.

In some implementations, the battery further includes a first busbar, a second busbar, and a third busbar. The first busbar is configured to electrically connect first electrode terminals of the plurality of battery cells. The second busbar is configured to electrically connect second electrode terminals of the plurality of battery cells. The third busbar is configured to electrically connect the first electrode terminal of at least one of the plurality of battery cells to the second electrode terminal of the at least one of the plurality of battery cells.

In a third aspect, embodiments of the present application provide an electrical apparatus including the battery cell according to any of the implementations of the first aspect, and the battery cell is configured to provide electrical power.

In a fourth aspect, embodiments of the present application provide a method for manufacturing a battery cell, and the method includes: providing a housing, a first electrode terminal and a second electrode terminal, in which the first electrode terminal and the second electrode terminal are arranged in the housing; providing a first electrode component and a second electrode component; installing the first electrode component and the second electrode component within the housing, and electrically connecting the first electrode terminal to the first electrode component and electrically connecting the second electrode terminal to the second electrode component. The first electrode component and the second electrode component are arranged along a first direction and are insulated from each other, the first electrode terminal is configured to lead out electrical power from the first electrode component, and the second electrode terminal is configured to lead out electrical power from the second electrode component.

In a fifth aspect, embodiments of the present application provide a system for manufacturing a battery cell, and the system includes a first providing apparatus, a second providing apparatus, and an installation apparatus. The first providing apparatus is configured to provide a housing, a first electrode terminal and a second electrode terminal, wherein the first electrode terminal and the second electrode terminal are arranged in the housing. The second providing apparatus is configured to provide a first electrode component and a second electrode component. The installation apparatus is configured to install the first electrode component and the second electrode component within the housing, electrically connect the first electrode terminal to the first electrode component and electrically connect the second electrode terminal to the second electrode component. The first electrode component and the second electrode component are arranged along a first direction and are insulated from each other, the first electrode terminal is configured to lead out electrical power from the first electrode component, and the second electrode terminal is configured to lead out electrical power from the second electrode component.

### BRIEF DESCRIPTION OF THE DRAWINGS

In order to illustrate technical solutions of embodiments of the present application more clearly, the drawings required for the embodiments of the present application will be briefly described. Obviously, the drawings described below are merely some embodiments of the present application. For a person skilled in the art, other drawings can also be obtained from these drawings without any inventive efforts.
Fig. 1 is a schematic structural view of a vehicle according to some embodiments of the present application.
Fig. 2 is a schematic exploded view of a battery according to some embodiments of the present application.
Fig. 3 is a schematic perspective view of a battery cell according to some embodiments of the present application.
Fig. 4 is a schematic exploded view of the battery cell shown in Fig. 3.
Fig. 5 is a schematic cross-sectional view of the battery cell shown in Fig. 3.
Fig. 6 is an enlarged schematic view of the battery cell shown in Fig. 5 at the block A.
Fig. 7 is an enlarged schematic view of Fig. 6 at the circle B.
Fig. 8 is a schematic cross-sectional view of a first electrode component of a battery cell according to some embodiments of the present application.
Fig. 9 is a schematic cross-sectional view of a first electrode component of a battery cell according to some other embodiments of the present application.
Fig. 10 is a schematic cross-sectional view of a first electrode component of a battery cell according to yet some other embodiments of the present application.
Fig. 11 is a simplified schematic view of a battery according to some embodiments of the present application.
Fig. 12 is a schematic front view of a battery according to some embodiments of the present application.
Fig. 13 is a schematic flowchart of a method for manufacturing a battery cell according to some embodiments of the present application.
Fig. 14 is a schematic block diagram of a system for manufacturing a battery cell according to some embodiments of the present application.

### Reference sings:

1: Vehicle; 2: Battery; 3: Controller; 4: Motor; 5: Box body; 5a: First box body portion; 5b: Second box body portion; 5c: Accommodation space; 6: Battery cell; 7a: First busbar; 7b: Second busbar; 7c: Third busbar;
10: Housing; 11: Housing body; 111: First side plate; 1 1 1a: Pressure relief mechanism; 112: Second side plate; 113: Opening; 12: End cap;
20: First electrode component; 21: First electrode plate; 22: Second electrode plate; 221: Stacked segment; 222: Bent segment; 23: Separator; 20a: First surface; 20b: Second surface;
30: Second electrode component;
40: First electrode terminal; 41: First positive electrode terminal; 42: First negative electrode terminal;
50: Second electrode terminal; 51: Second positive electrode terminal; 52: Second negative electrode terminal;
60: First insulating component; 61: Via;
70: Second insulating component;
80: Third insulating component;
90: System for manufacturing; 91: First providing apparatus; 92: Second providing apparatus; 93: Installation apparatus;
X: First direction; Y: Second direction; Z: Third direction.

### DETAILED DESCRIPTION

In order to make the purposes, technical solutions and advantages of embodiments of the present application more clear, the technical solutions of the embodiments of the present application will be described clearly in conjunction with the drawings in the embodiments of the present application. Obviously, the described embodiments are a part of the embodiments of the present application, but not all of the embodiments. Based on the embodiments in the present application, all other embodiments obtained by those ordinary skilled in the art without any creative work shall fall within the protection scope of the present application.

Unless otherwise defined, all technical and scientific terms used in the present application have the same meanings as commonly understood by those skilled in the technical field of the present application. In the present application, the terms used in the description of the present application are only for purposes of description of specific embodiments, and are not intended to limit the present application. The terms "comprising" and "having" in the description and claims of the present application and the above brief description of the drawings and any variations thereof are intended to cover non-exclusive inclusions. The terms "first", "second" and the like in the description and claims or the above brief description of the drawings of the present application are used to distinguish different objects, rather than to describe a specific order or primary and secondary relationship.

Reference to "an embodiment" in the present application means that a particular feature, structure or characteristic described in connection with the embodiment may be included in at least one embodiment of the present application. Appearances of the phrase in various places in the description are not necessarily all referring to the same embodiment, nor a separate or alternative embodiment that is mutually exclusive of other embodiments.

In the description of the present application, it should be noted that, unless otherwise expressly specified and limited, the terms "installed", "connected", "connection" and "attached" should be understood in a broad sense, for example, they may refer to a fixed connection, a detachable connection or an integral connection, which may be a direct connection, an indirect connection via an intermediate medium, or an internal communication between two elements. For those of ordinary skill in the art, the specific meanings of the above-mentioned terms in the present application can be understood in accordance with specific conditions.

Term "and/or" in the present application is only a kind of association relationship that describes associated objects, which indicates three possible kinds of relationships. For example, A and/or B may indicate the following three cases: A exists alone, A and B exist simultaneously, and B exists alone. In addition, the character "/" in the present application generally indicates that the associated objects have an "or" relationship.

In the embodiments of the present application, the term "parallel" includes not only the case of being absolutely parallel, but also the case of being approximately parallel in the conventional knowledge of engineering. Similarly, the term "perpendicular" includes not only the case of being absolutely perpendicular, but also the case of being approximately perpendicular in the conventional knowledge of engineering.

In the embodiments of the present application, the same reference numerals denote the same components, and for brevity, in different embodiments, detailed descriptions of the same components are omitted. It should be understood that sizes, such as a thickness, a length and a width, and the like of various components in the embodiments of the present application shown in the drawings, as well as an overall thickness, a length and a width, and the like of an integrated device are only exemplary descriptions, and should not constitute any limitation to the present application.

The "plurality" that appears in the present application refers to two or more (including two).

In the present application, a battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited in the embodiments of the present application.

A battery mentioned in the embodiments of the present application refers to a single physical module including one or more battery cells to provide a higher voltage and a higher capacity. For example, the battery mentioned in the present application may be a battery module, a battery pack, or the like. A battery typically includes a box body for enclosing one or more battery cells. The box body can prevent liquids or other foreign objects from affecting the charging or discharging of the battery cells.

A battery cell includes an electrode component and electrolyte, and the electrode component includes a positive electrode plate, a negative electrode plate and a separator. The operation of the battery cell mainly relies on a movement of metal ions between the positive electrode plate and the negative electrode plate. The positive electrode plate includes a positive electrode current collector and a positive electrode active material layer, and the positive electrode active material layer is coated on a surface of the positive electrode current collector; the positive electrode current collector includes a positive electrode current collecting portion coated with the positive electrode active material layer and a positive electrode tab not coated with the positive electrode active material layer. Taking a lithium ion battery as an example, a material of the positive electrode current collector may be aluminum, the positive electrode active material layer includes a positive electrode active material. The positive electrode active material may be lithium cobalt oxide, lithium iron phosphate, ternary lithium or lithium manganate, or the like. The negative electrode plate includes a negative electrode current collector and a negative electrode active material layer, and the negative electrode active material layer is coated on a surface of the negative electrode current collector; the negative electrode current collector includes a negative electrode current collecting portion coated with the negative electrode active material layer and a negative electrode tab not coated with the negative electrode active material layer. A material of the negative electrode current collector may be copper, the negative electrode active material layer includes a negative electrode active material, and the negative electrode active material may be carbon or silicon, and the like. A material of the separator may be PP (polypropylene), PE (polyethylene), or the like.

The battery cell further includes a housing and electrode terminals arranged in the housing, the housing is used for accommodating the electrode component and the electrolyte, and the electrode terminals are used for electrically connecting to the electrode component to lead out electrical power of the electrode component.

With the development of battery technology, users' demand on capacity of the battery are increasing. For example, with increasing popularity of new energy vehicles, a demand for use of batteries in the new energy vehicles is becoming higher and higher. Users' demand on mileage of a new energy vehicle is constantly increasing, and the capacity of the battery used by the new energy vehicle needs constant increase; and meanwhile, internal consumption and heat generation due to internal resistance are required to be minimized during the use of the battery.

Generally, a battery includes a box body and a plurality of battery cells accommodated within the box body. A fixing structure for supporting and fixing the battery cells is often arranged in the box body. For the battery, under a premise that the capacity of the battery is determined, the less a size of the battery cells is, the greater a number of the battery cells is, so that more fixing structures need to be arranged in the box body to fix the battery cells, this may result in a low utilization rate of inner space of the battery, and cause that requirements for an energy density of the battery cannot be met.

In order to simplify the structure of the battery and improve the energy density of the battery, inventors tried to increase the size of single battery cells to reduce the number of the battery cells in the battery, and simplify the fixing structures in the box body, thereby improving the utilization rate of the inner space of the battery.

In order to adapt to the size of the battery cells, a plurality of electrode components are arranged in sequence in the housing of the battery cells by the inventors, and the plurality of electrode components are connected in series or in parallel to form an integrated body. Therefore, the size of the single electrode components can be reduced to simplify a process for molding the electrode components.

However, the inventors have found that a plurality of electrode components need to lead out the current through a same electrode terminal, and the current generated by the electrode components away from the electrode terminal needs to pass through the electrode components close to the electrode terminal to be transmitted to the electrode terminal. Therefore, this causes a long conductive path and a large internal resistance of the electrode components away from the electrode terminal, thereby resulting in low battery cell power. The electrode components close to the electrode terminal not only conduct the current generated by themselves, but also conduct the current generated by the electrode components away from the electrode terminal. Therefore, this may cause the electrode components close to the electrode terminal to generate more heat, thereby affecting a charging and discharging performance.

In view of this, embodiments of the present application provide a technical solution in which a battery cell includes a housing, a first electrode component, a second electrode component, a first electrode terminal, and a second electrode terminal. The first electrode component and the second electrode component are accommodated within the housing and arranged along a first direction, and the first electrode component is insulated from the second electrode component. The first electrode terminal is arranged within the housing and electrically connected to the first electrode component to lead out electrical power from the first electrode component. The second electrode terminal is arranged within the housing and electrically connected to the second electrode component to lead out electrical power from the second electrode component. In this technical solution, the electrical power generated by the first electrode component and the electrical power generated by the second electrode component are respectively led out through the first electrode terminal and the second electrode terminal, so that the conductive path can be shortened, the internal resistance can be reduced, the heat generation can be reduced, thereby improving the charging and discharging performance of the battery cell.

The technical solution described in the embodiments of the present application are applicable to a battery and an electrical apparatus using a battery.

The electrical apparatus may be a vehicle, a mobile phone, a portable device, a notebook computer, a ship, a spacecraft, an electric toy, an electric tool, and the like. The vehicle may be a fuel vehicle, a gas vehicle or a new energy vehicle, and the new energy vehicle may be a pure electric vehicle, a hybrid vehicle or an extended-range vehicle, and the like; the spacecraft includes an airplane, a rocket, a space shuttle, a spacecraft, and the like; the electric toy includes a fixed or movable electric toy, such as a game console, an electric vehicle toy, an electric ship toy and an electric plane toy, and the like; the electric tool includes a metal-cutting electric tool, a grinding electric tool, an assembling electric tool and a railway electric tool, such as, an electric drill, an electric grinder, an electric wrench, an electric screwdriver, an electric hammer, an electric impact drill, a concrete vibrator and an electric planer, and the like. There is no special limitation on the above electrical apparatus in the embodiments of the present application.

In the following embodiments, for the convenience of description, the electrical apparatus is taken as a vehicle for illustration.

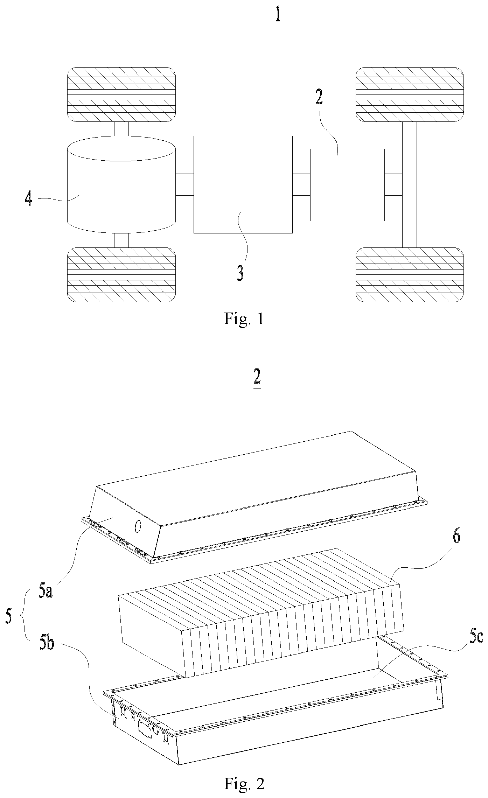

Fig. 1 is a schematic structural view of a vehicle according to some embodiments of the present application.

As shown in Fig. 1, a battery 2 is arranged inside a vehicle 1. The battery 2 may be arranged at the bottom or the head or the rear of the vehicle 1. The battery 2 may be used for supplying power to the vehicle 1, for example, the battery 2 may be used as a manipulating power source of the vehicle 1.

The vehicle 1 may further include a controller 3 and a motor 4. The controller 3 is configured to control the battery 2 to supply power to the motor 4, for example, for satisfying work power demands in the starting, navigating, and driving of the vehicle 1.

In some embodiments of the present application, the battery 2 may not only be used as the manipulating power source of the vehicle 1, but may also be used as a driving power source of the vehicle 1 to provide driving power for the vehicle 1 instead of or partially instead of fuel or natural gas.

Fig. 2 is a schematic exploded view of a battery according to some embodiments of the present application.

As shown in Fig. 2, the battery 2 includes a box body 5 and a battery cell 6 accommodated within the box body 5.

The box body 5 is used for accommodating the battery cell 6, and the box body 5 may be of various structures. In some embodiments, the box body 5 may include a first box body portion 5a and a second box body portion 5b. The first box body portion 5a and the second box body portion 5b may be covered by each other. The first box body portion 5a and the second box body portion 5b together define an accommodating space 5c for accommodating the battery cell 6. The second box body portion 5b may be a hollow structure with one open side. The first box body portion 5a is a plate-shaped structure. The first box body portion 5a covers the open side of the second box body portion 5b, so that the box body 5 having the accommodating space 5c is formed. Each of the first box body portion 5a and the second box body portion 5b may be a hollow structure with one open side, and the opening side of the first box body portion 5a covers the opening side of the second box body portion 5b, so that the box body 5 having the accommodating space 5c is formed. Of course, the first box body portion 5a and the second box body portion 5b may be in various shapes, such as a cylinder, a cuboid, and the like.

In order to improve a tightness after the first box body portion 5a and the second box body portion 5b are connected, a sealing component, such as sealant, a sealing ring, and the like, may be provided between the first box body portion 5a and the second box body portion 5b.

Assuming that the first box body portion 5a covers the top of the second box body portion 5b, the first box body portion 5a may be referred to as an upper box cover plate, and the second box body portion 5b may be referred to as a lower box body.

In the battery 2, there may be one such battery cell 6 or a plurality of such battery cells 6. Under a condition that there are a plurality of such battery cells 6, the plurality of battery cells 6 may be connected in series or in parallel or in a parallel-series connection, and a parallel-series connection means that the connections between the plurality of battery cells 6 include a series connection and a parallel connection.

The plurality of battery cells 6 may be directly connected in series or in parallel or in a parallel-series connection, and then an integrated body composed of the plurality of battery cells 6 is accommodated within the box body 5; of course, the plurality of battery cells 6 may be connected in series or in parallel or in a parallel-series connection to form a battery module, and a plurality of battery modules are connected in series or in parallel or in a parallel-series connection to form an integrated body, and are accommodated within the box body 5.

In some embodiments, the integrated body of the plurality of battery cells 6 is directly installed on the box body 5. Accordingly, a process for forming the plurality of battery cells 6 into the battery module may omitted, and a fixing frame for fixing the battery cells 6 in the battery module may be eliminated, so that a structure of the battery can be simplified, thereby improving the energy density of the battery.

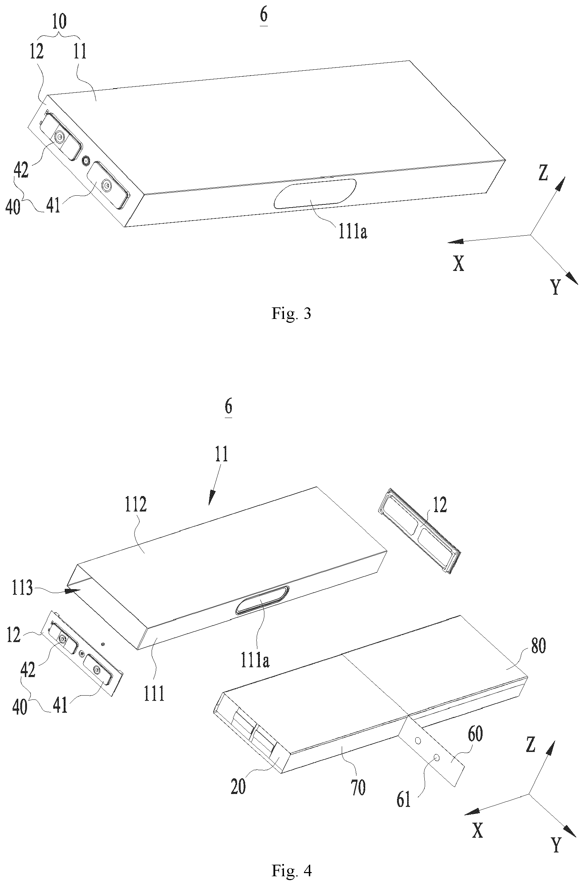

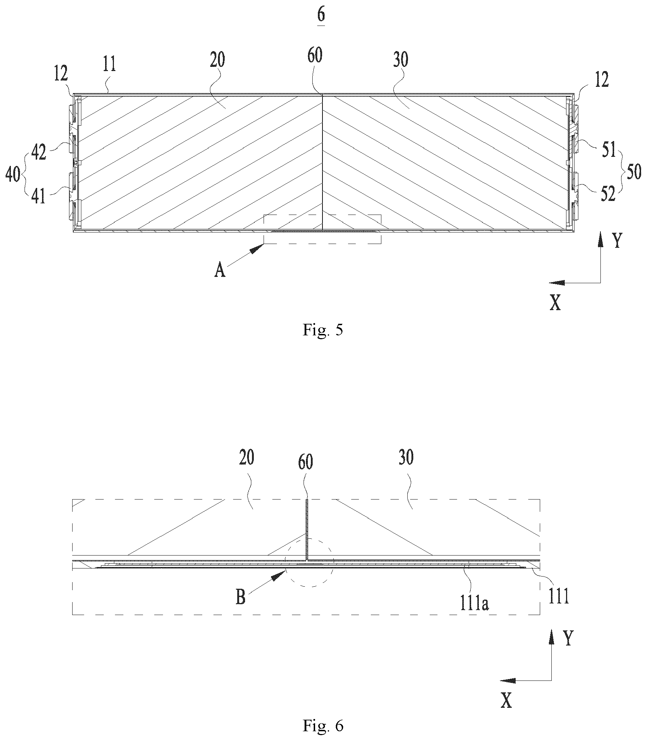

Fig. 3 is a schematic perspective view of a battery cell according to some embodiments of the present application; Fig. 4 is a schematic exploded view of the battery cell shown in Fig. 3; Fig. 5 is a schematic cross-sectional view of the battery cell shown in Fig. 3.

As shown in Fig. 3 to Fig. 5, the battery cell 6 according to the embodiments of the present application includes a housing 10, a first electrode component 20, a second electrode component 30, a first electrode terminal 40, and a second electrode terminal 50. The first electrode component 20 and the second electrode component 30 are accommodated within the housing 10 and arranged along a first direction X, and the first electrode component 20 is insulated from the second electrode component 30. The first electrode terminal 40 is arranged on the housing 10 and electrically connected to the first electrode component 20 to lead out electrical power from the first electrode component 20. The second electrode terminal 50 is arranged on the housing 10 and electrically connected to the second electrode component 30 to lead out electrical power from the second electrode component 30.

The housing 10 is a hollow structure, and an accommodating cavity for accommodating the electrode component and the electrolyte is formed inside the housing. The housing 10 may be in various shapes, for example, a cylinder, a cuboid, and the like. The shape of the housing 10 may be determined according to the specific shape of the electrode component. For example, under a condition that the electrode component is a cylinder structure, the housing may be selected to be a cylindrical housing; under a condition that the electrode component is a cuboid structure, the housing 20 may be selected to be a cuboid housing.

The first electrode component 20 and the second electrode component 30 are core components of the battery cell 6 for achieving charging and discharging functions. In an example, the first electrode component 20 and the second electrode component 30 each include a first electrode plate, a second electrode plate and a separator, the first electrode plate and the second electrode plate have opposite polarities, and the separator is configured to insulate and separate the first electrode plate from the second electrode plate. The operation of the first electrode component 20 and the second electrode component 30 mainly relies on a movement of metal ions between the first electrode plate and the second electrode plate.

One of the first electrode plate and the second electrode plate is a positive electrode plate, and the other of the first electrode plate and the second electrode plate is a negative electrode plate.

There may be one first electrode component 20 or a plurality of first electrode components 20, which is not limited in the embodiment. In an example, there are a plurality of first electrode components 20 which are stacked, and a direction along which the plurality of first electrode components 20 are stacked may be perpendicular to the first direction X. Optionally, the plurality of first electrode components 20 are connected in parallel.

There may be one second electrode component 30 or a plurality of second electrode components 30, which is not limited in the embodiment.

In the embodiment, insulating the first electrode component 20 from the second electrode component 30 means that the first electrode component 20 is electrically isolated from the second electrode component 30, so that it is difficult for electrons generated by the first electrode component 20 to be transmitted to the second electrode component 30 through a component inside the housing 10, and it is difficult for electrons generated by the second electrode component 30 to be transmitted to the first electrode component 20 through a component inside the housing 10.

In the embodiment, the first electrode component 20 and the second electrode component 30 may be insulated from each other by other insulating components, or may be insulated from each other by their own structures. As an example, the first electrode component 20 and the second electrode component 30 may be insulated from each other by their own separators.

The first electrode terminal 40 is a component of the battery cell 6 for leading out electrical power generated by the first electrode component 20, and is at least partially exposed to the outside of the battery cell 6, so as to be connected to other conductive structures such as a busbar. Under a condition that the battery cell 6 discharges, the electrical power generated by the first electrode component 20 is led out through the first electrode terminal 40; under a condition that the battery cell 6 is charged, electrical power supplied from an external power source is led into the first electrode component 20 through the first electrode terminal 40. The first electrode terminal 40 may be directly connected to the first electrode component 20, or may be indirectly connected to the first electrode component 20 through other components.

The second electrode terminal 50 is a component of the battery cell 6 for leading out electrical power generated by the second electrode component 30, and is at least partially exposed to the outside of the battery cell 6, so as to be connected to other conductive structures such as a busbar. Under a condition that the battery cell 6 discharges, the electrical power generated by the second electrode component 30 is led out through the second electrode terminal 50; under a condition that the battery cell 6 is charged, electrical power supplied from an external power source is led into the second electrode component 30 through the second electrode terminal 50. The second electrode terminal 50 may be directly connected to the second electrode component 30, or may be indirectly connected to the second electrode component 30 through other components.

In the embodiment of the present application, the first electrode component 20 and the second electrode component 30 are arranged along the first direction X, so that a size of the battery cell 6 along the first direction X can be increased, thereby increasing the space utilization rate of the battery cell 6 in the battery and improving the energy density. The first electrode component 20 is insulated from the second electrode component 30, and a current generated by the first electrode component 20 and a current generated by the second electrode component 30 are respectively led out through the first electrode terminal 40 and the second electrode terminal 50, and the first electrode component 20 do not need to transmit the current of the second electrode component 30 and the second electrode component 30 do not need to transmit the current of the first electrode component 20 , so that a conductive path of the first electrode component 20 and a conductive path of the second electrode component 30 can be shortened, internal resistance and heat generation can be reduced, power of the battery cell 6 can be increased, thereby improving a charging and discharging performance of the battery cell 6.

In some embodiments, a space on an outer side of the first electrode component 20 is connected to a space on an outer side of the second electrode component 30.

In the embodiment, the electrolyte may flow between the first electrode component 20 and the second electrode component 30, so as to improve consistency of the electrolyte wetting the first electrode component 20 and the second electrode component 30.

In some embodiments, the first electrode terminal 40 and the second electrode terminal 50 are installed on two ends of the housing 10 along the first direction X, respectively.

In the embodiment, a distance between a connection structure between the first electrode terminal 40 and the first electrode component 20 and a connection structure between the second electrode terminal 50 and the second electrode component 30 can be increased, so that a risk caused by interference can be reduced, thereby simplifying an assembly process.

The battery cell 6 has a greater size along the first direction X, and the first electrode terminal 40 and the second electrode terminal 50 are installed on two ends of the housing 10 along the first direction X, respectively, so that an effect of the first electrode terminal 40 and the second electrode terminal 50 on a volume of the battery cell 6 can be reduced, thereby increasing the energy density of the battery cell 6.

In some embodiments, the first electrode terminal 40 includes a first positive electrode terminal 41 electrically connected to a positive electrode plate of the first electrode component 20 and a first negative electrode terminal 42 electrically connected to a negative electrode plate of the first electrode component 20. The second electrode terminal 50 includes a second positive electrode terminal 51 electrically connected to a positive electrode plate of the second electrode component 30 and a second negative electrode terminal 52 electrically connected to a negative electrode plate of the second electrode component 30.

In some embodiments, a maximum size of the battery cell 6 along the first direction X is from 200mm to 2000mm. Optionally, a maximum size of the battery cell 6 along the first direction X is 200mm, 400mm, 500mm, 1000mm, 1200mm, 1500mm or 2000mm.

In the embodiment, the battery cell 6 has a greater size along the first direction X, so that the number of battery cells 6 in the battery is reduced, the number of fixing structures for fixing the battery cells 6 is reduced, and the space utilization rate is improved, thereby increasing the energy density of the battery. The first electrode terminal 40 and the second electrode terminal 50 can respectively transmit a current of the first electrode component 20 and a current of the second electrode component 30, so that currents flowing between the first electrode component 20 and the second electrode component 30 can be reduced. Even if an overall length of the battery cell 6 is longer, requirements for an internal resistance of the first electrode component 20 and an internal resistance of the second electrode component 30 can be met, and the heat generation is reduced, thereby improving the charging and discharging performance of the battery cell 6.

The housing 10 has a greater size along the first direction X, and, accordingly, is tougher, so as to reduce a risk caused by cracking of the housing 10.

In some embodiments, the size of the battery cell 6 is long enough to match a size of the box body. The plurality of battery cells 6 may be directly arranged in parallel in the box body without first assembling the battery cells 6 into a battery module, so that a frame structure for fixing the battery cells 6 in the battery module may not be used, thereby saving the internal space of the battery, improving the utilization rate space of the space and the energy density of the battery, simplifying the process for assembling the battery cells 6, and reducing costs.

In some embodiments, a maximum size of the battery cell 6 along the first direction X is from 400mm to 1200mm.

In some embodiments, the first direction X is parallel to a length direction of the battery cell 6.

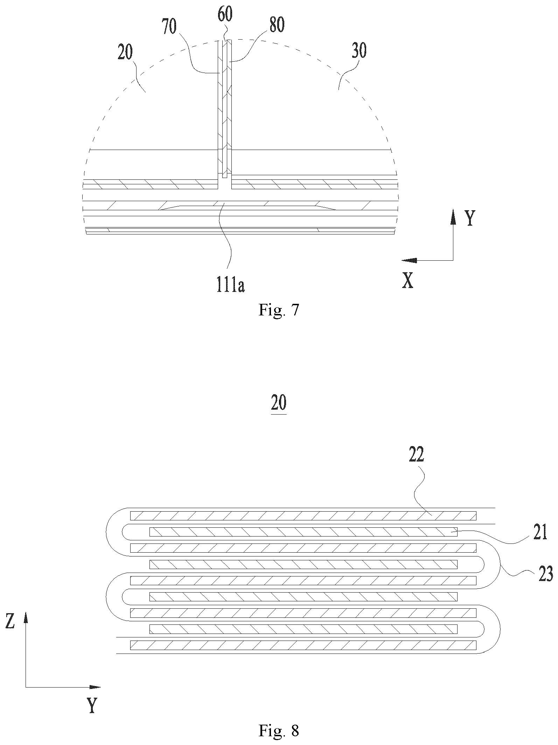

Fig. 6 is an enlarged schematic view of the battery cell shown in Fig. 5 at the block A; Fig. 7 is an enlarged schematic view of Fig. 6 at the circle B.

With reference to Fig. 4 to Fig. 7, in some embodiments, the first electrode component 20 and the second electrode component 30 are spaced apart along the first direction X.

In the present application, the first electrode component 20 and the second electrode component 30 are spaced apart by a certain distance along the first direction X, so that a contact possibility of an electrode plate of the first electrode component 20 and an electrode plate of the second electrode component 30 can be reduced, and the risk caused by the short circuit can be reduced, thereby improving the safety.

In some embodiments, the battery cell 6 further includes a first insulating component 60, and at least a part of the first insulating component 60 is arranged between the first electrode component 20 and the second electrode component 30, so as to insulate and separate the first electrode component 20 from the second electrode component 30.

In the embodiment, the first insulating component 60 insulates and separates the first electrode component 20 from the second electrode component 30, and under a condition that the battery cell 6 is subjected to an external impact, the first insulating component 60 can protect the first electrode component 20 and the second electrode component 30, so that the contact possibility of the electrode plate of the first electrode component 20 and the electrode plate of the second electrode component 30 can be reduced, and the risk caused by the short circuit can be reduced, thereby improving the safety.

In some embodiments, the first insulating component 60 is provided with a via 61, and the via 61 connects a space on a side of the first insulating component 60 facing the first electrode component 20 to a space on a side of the first insulating component 60 facing the second electrode component 30.

In the embodiment, the via 61 can provide a flow channel for the electrolyte, and the electrolyte can flow in spaces on two sides of the first insulating component 60 through the via 61, so as to improve the consistency of the electrolyte wetting the first electrode component 20 and the second electrode component 30.

In some embodiments, the battery cell 6 further includes a second insulating component 70 coated on an outer side of the first electrode component 20, so as to separate the first electrode component 20 from at least a part of the housing 10. The first insulating component 60 is connected to the second insulating component 70.

In the embodiment, the second insulating component 70 can reduce a risk caused by conducting the positive electrode plate and the negative electrode plate of the first electrode component 20 by the housing 10, thereby improving the safety. The second insulating component 70 is connected to the first insulating component 60, so as to reduce an amplitude of shaking of the first insulating component 60 under a condition that the battery cell is subjected to the external impact, and reduce a risk caused by failure of the first insulating component 60, thereby improving the safety.

In some embodiments, along the first direction X, a part of the second insulating component 70 is located between the first electrode component 20 and the first insulating component 60, and connected to the first electrode component 20 and the first insulating component 60. In the embodiment, the second insulating component 70 may also have a function of insulating and separating the first electrode component 20 from the second electrode component 30.

In some embodiments, the second insulating component 70 is a cylindrical structure with an opening on one end formed by bending the insulating plate.

In some embodiments, the first insulating component 60 is connected to the second insulating component 70 by bonding, fusing, or by other ways.

In some embodiments, the battery cell 6 further includes a third insulating component 80 coated on an outer side of the second electrode component 30, so as to separate the second electrode component 30 from at least a part of the housing 10.

In some embodiments, at least a part of the third insulating component 80 is located between the first insulating component 60 and the second electrode component 30.

In some embodiments, the first insulating component 60 is a flat plate in shape. As an example, a thickness of the first insulating component 60 is from 0.05mm to 2mm.

In some embodiments, the first insulating component 60 is made of polypropylene, polyethylene, polyethylene terephthalate, or other insulating materials.

In some embodiments, the housing 10 includes a housing body 11 and two end caps 12, the housing body 11 has openings 113 on two ends along the first direction X, and the two end caps 12 are configured to cover two openings 113, respectively. The first electrode terminal 40 and the second electrode terminal 50 are installed on the two end caps 12, respectively.

As an example, the battery cell 6 may be assembled according to following steps: connecting the first electrode terminal 40 pre-installed on one end cap 12 to the first electrode component 20, and connecting the second electrode terminal 50 pre-installed on the other end cap 12 to the second electrode component 30; installing the first electrode component 20 into the housing body 11 through one opening 113, and installing the second electrode component 30 into the housing body 11 through the other opening 113; connecting the housing body 11 to the two end caps 12.

In the embodiment, two openings 113 and two end caps 12 are arranged, so that assembling of the first electrode component 20 and assembling of the second electrode component 30 are facilitated, thereby simplifying a process for assembling the battery cell 6.

In some embodiments, the housing body 11 includes two first side plates 111 arranged oppositely along a second direction Y perpendicular to the first direction X. At least one of the first side plates 111 is provided with a pressure relief mechanism 111a, and the pressure relief mechanism 111a is configured to be actuated under a condition that an internal pressure or temperature of the battery cell 6 reaches a threshold, so as to relieve the internal pressure. Along the second direction Y, an end portion of the first electrode component 20 facing the second electrode component 30 at least partially overlaps with the pressure relief mechanism 1 1 1a, and an end portion of the second electrode component 30 facing the first electrode component 20 at least partially overlaps with the pressure relief mechanism 111a.

The pressure relief mechanism 111a is an element or component that is actuated under a condition that the internal pressure of the battery cell 6 reaches a preset threshold, so as to relieve the internal pressure. The threshold is designed according to design requirements. The threshold may depend on materials of one or more of the positive electrode plate, the negative electrode plate, the electrolyte and the separator in the battery cell 6. The internal pressure of the battery cell 6 is an internal pressure of the housing 10.

The pressure relief mechanism 111a may take the form of, for example, an explosion valve, a gas valve, a pressure release valve, a safety valve, or the like, and may be made by using specifically a pressure-sensitive element or structure, that is, under a condition that the internal pressure of the battery cell 6 reaches a preset threshold, the pressure relief mechanism 111a performs an action or a weak portion arranged in the pressure relief mechanism 111a bursts, thereby forming an opening or a passage for relieving the internal pressure.

The "actuated" mentioned in the present application means that the pressure relief mechanism 111a is operated or activated to a certain state, so that the internal pressure of the battery cells 6 is relieved. An action generated by the pressure relief mechanism 11 1a may include, but are not limited to: at least a part of the pressure relief mechanism 111a bursts, is broken, torn or opened, and the like. Under a condition that the pressure relief mechanism 111a is actuated, the high-temperature and high-pressure substance inside the battery cell 6 is discharged as an emission from the actuated portion. In this way, under a condition that the pressure is controllable, the battery cell 6 can relieve the pressure, thereby avoiding potentially serious accidents.

The emission from the battery cell 6 mentioned in the present application includes, but is not limited to: electrolyte, dissolved or split positive electrode plate and negative electrode plate, a fragment of the separator, high-temperature and high-pressure gas generated by the reaction, flame, and the like.

In the embodiment, the pressure relief mechanism 111a can relieve the internal pressure of the battery cell 6 under a condition the battery cell 6 has thermal runaway, so that a risk caused by explosion of the battery cell is reduced, thereby improving the safety. Under a condition that the battery cell 6 has the thermal runaway, the high-temperature and high-pressure substance discharged from the end portion of the first electrode component 20 facing the second electrode component 30 and a high-temperature and high-pressure substance discharged from the end portion of the second electrode component 30 facing the first electrode component 20 can quickly act on the pressure relief mechanism 111a, so that the pressure relief mechanism 111a is timely actuated and releases the internal pressure.

In some embodiments, under a condition that the battery cell 6 is arranged in the box body of the battery, the second direction Y is parallel to the vertical direction, and the pressure relief mechanism IIIa of the battery cell 6 is arranged under the first electrode component 20 and the second electrode component 30. In a vehicle, under a condition that the pressure relief mechanism 111a is actuated, the discharged high-temperature and high-pressure substance may be emitted downward, so that a risk of causing harm to a user may be reduced.

In some embodiments, the housing body 11 includes two second side plates 112 arranged oppositely along a third direction Z perpendicular to the first direction X and the second direction Y An area of the second side plate 112 is greater than an area of the first side plate 111.

In the embodiment, the first electrode component 20 and the second electrode component 30 may expand and press the first side plate 111 and the second side plate 112 in a process of charging, thereby causing the first side plate 111 and the second side plate 112 to deform. The first side plate 111 has a smaller area, so that it receives a less expansive force, and has a less deformation. In the embodiment, the pressure relief mechanism 111a is arranged on the first side plate with the smaller area, so that a deformation of the pressure relief mechanism 111a can be reduced, and a risk caused by fatigue failure of the pressure relief mechanism 111a can be reduced, thereby improving the safety.

Fig. 8 is a schematic cross-sectional view of a first electrode component of a battery cell according to some embodiments of the present application.

As shown in Fig. 8, in some embodiments, the first electrode component 20 includes a plurality of first electrode plates 21 and a plurality of second electrode plates 22 stacked alternately along the third direction Z. The third direction Z is perpendicular to the first direction.

In the embodiment of the present application, winding directions of the first electrode plate 21 and the second electrode plate 22 are perpendicular to the first direction X, and a gap for gas to pass through is formed between an end portion of the first electrode plate 21 along the first direction X and an end portion of the second electrode plate 22 along the first direction X; under a condition that the first electrode component 20 has the thermal runaway, the gas can pass through the gap and act on the pressure relief mechanism, so as to cause the pressure relief mechanism to be actuated timely and relieve the internal pressure.

The first electrode plate 21 and the second electrode plate 22 have opposite polarities. As an example, one of the first electrode plate 21 and the second electrode plate 22 is a positive electrode plate, and the other of the first electrode plate 21 and the second electrode plate 22 is a negative electrode plate.

In the process of charging, the first electrode component 20 expands along the third direction Z to a maximum extent, the pressing force between the first electrode component 20 and the second side plate is greater than the expansive force between the first electrode component 20 and the first side plate, and the first side plate deforms less than the second side plate. Accordingly, the pressure relief mechanism may be arranged on the first side plate.

In some embodiments, the first electrode component 20 further includes separator 23 configured to insulate and separate a first electrode plate 21 from an adjacent second electrode plate 22.

In some embodiments, the second electrode component also includes a plurality of first electrode plates and a plurality of second electrode plates stacked alternately along the third direction.

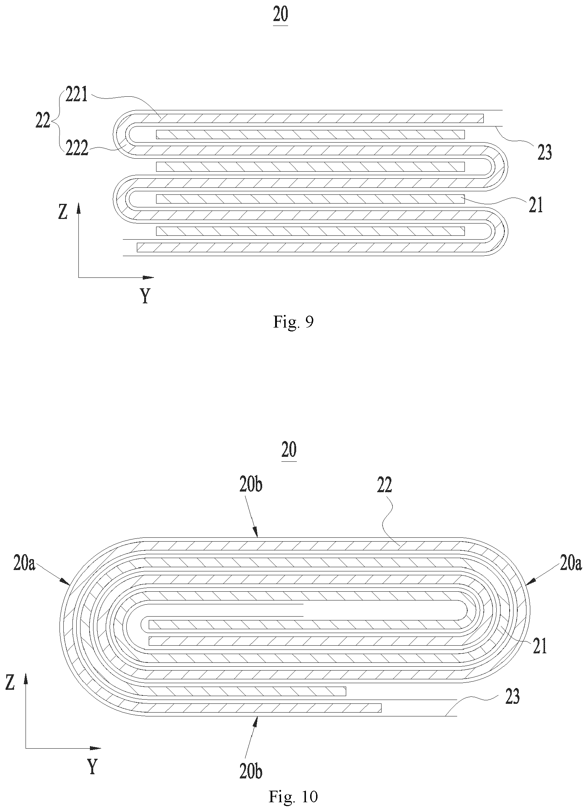

Fig. 9 is a schematic cross-sectional view of a first electrode component of a battery cell according to some other embodiments of the present application.

As shown in Fig. 9, in some embodiments, the first electrode component 20 includes a plurality of first electrode plates 21 and a second electrode plate 22, the second electrode plate 22 is continuously bent and includes a plurality of stacked segments 221 and a plurality of bent segments 222, the plurality of stacked segments 221 and the plurality of first electrode plates 21 are alternately stacked along the third direction, and each of the plurality of bent segments 222 is configured to connect two adjacent ones of the plurality of stacked segments 221. The third direction Z is perpendicular to the first direction.

In the embodiment of the present application, winding direction of the first electrode plate 21 and the stacked segment 221 are perpendicular to the first direction X, and a gap for gas to pass through is formed between an end portion of the first electrode plate 21 along the first direction X and an end portion of the second electrode plate 22 along the first direction X; under a condition that the first electrode component 20 has the thermal runaway, the gas can pass through the gap and act on the pressure relief mechanism, so as to cause the pressure relief mechanism to be actuated timely and relieve the internal pressure.

The third direction Z is parallel to a thickness direction of the stacked segment 221 and a thickness direction of the first electrode plate 21. As an example, the first electrode plate 21 and the stacked segment 221 are both rectangular flat plates and arranged parallel to each other.

In the process of charging, the first electrode component 20 expands along the third direction Z to a maximum extent, the pressing force between the first electrode component 20 and the second side plate is greater than the expansive force between the first electrode component 20 and the first side plate, and the first side plate deforms less than the second side plate. Accordingly, the pressure relief mechanism 111a may be arranged on the first side plate.

Fig. 10 is a schematic cross-sectional view of a first electrode component of a battery cell according to yet some other embodiments of the present application.

As shown in Fig. 10, the first electrode component 20 includes a first electrode plate 21 and a second electrode plate 22 wound around a winding axis parallel to the first direction X.

In the embodiment of the present application, winding directions of the first electrode plate 21 and the second electrode plate 22 are perpendicular to the first direction X, and a gap for gas to pass through is formed between an end portion of the first electrode plate 21 along the first direction X and an end portion of the second electrode plate 22 along the first direction X; under a condition that the first electrode component 20 has the thermal runaway, the gas can pass through the gap and act on the pressure relief mechanism, so as to cause the pressure relief mechanism to be actuated timely and relieve the internal pressure.

In some embodiments, the first electrode component 20 is a winding structure and includes two first surfaces 20a arranged oppositely along the second direction Y and two second surfaces 20b arranged oppositely along the third direction Z, and the first direction X, the second direction Y, and the third direction Z are perpendicular to each other. An area of the second surfaces 20b is greater than an area of the first surfaces 20a.

The first electrode component 20 further includes a separator 23. The first electrode plate 21, the second electrode plate 22 and the separator 23 are band-shaped structures. The first electrode plate 21, the separator 23, and the second electrode plate 22 are stacked in sequence and wound at least twice around the winding axis to form the first electrode component 20. The winding axis is parallel to the first direction.

In the process of charging, the first electrode component 20 expands along the third direction Z to a maximum extent, the pressing force between the first electrode component 20 and the second side plate is greater than the expansive force between the first electrode component 20 and the first side plate, and the first side plate deforms less than the first side plate. Accordingly, the pressure relief mechanism 111a may be arranged on the first side plate.

In some embodiments, at least a part of the first surface 20a is an arc in shape.

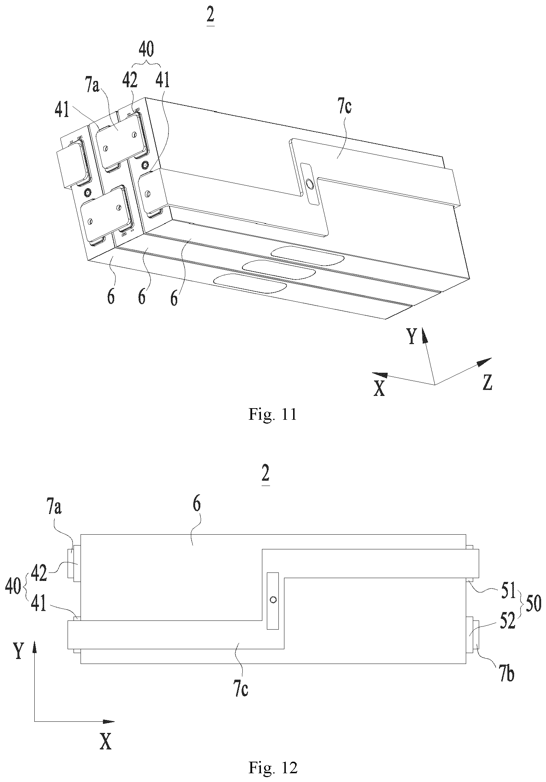

Fig. 11 is a simplified schematic view of a battery according to some embodiments of the present application; Fig. 12 is a schematic front view of a battery according to some embodiments of the present application.

As shown in Fig. 11 and Fig. 12, embodiments of the present application further provide a battery 2 including a plurality of the battery cells 6 according to any of the foregoing embodiments.

In some embodiments, the battery 2 further includes a first busbar 7a, a second busbar 7b, and a third busbar 7c. The first busbar 7a is configured to electrically connect first electrode terminals 40 of the plurality of battery cells 6. The second busbar 7b is configured to electrically connect second electrode terminals 50 of the plurality of battery cells 6. The third busbar 7c is configured to electrically connect the first electrode terminal 40 of at least one of the plurality of battery cells 6 to the second electrode terminal 50 of the at least one of the plurality of battery cells 6.

The first busbar 7a is configured to connect the first electrode components of the plurality of battery cells 6 in series or in parallel or in a parallel-series connection. As an example, the first busbar 7a connects a first positive terminal 41 of one battery cell 6 to a first negative terminal 42 of the other battery cell 6, so as to connect the first electrode components of two battery cells 6 in series.

The second busbar 7b is configured to connect the second electrode components of the plurality of battery cells 6 in series or in parallel or in a parallel-series connection. As an example, the second busbar 7b connects a second positive terminal 51 of one battery cell 6 to a second negative terminal 52 of the other battery cell 6, so as to connect the second electrode components of the two battery cells 6 in series.

The third busbar 7c is configured to connect the first electrode component of at least one of the plurality of battery cells 6 to the second electrode component of the at least one of the plurality of battery cells 6 in series or in parallel. As an example, the third busbar 7c is configured to connect the first electrode component of one of the plurality of battery cells 6 to the second electrode component of the one of the plurality of battery cells 6 in parallel. For example, the third busbar 7c is configured to connect a first positive electrode terminal 41 of one of the plurality of battery cells 6 to a second positive electrode terminal 51 of the one of the plurality of battery cells 6 in parallel, so as to serve as a confluent positive output electrode of the battery 2.

In the embodiment, the battery 2 electrically connects the first electrode components of the plurality of battery cells 6 to the second electrode components of the plurality of battery cells 6 through a plurality of busbars outside the battery cells 6, so as to achieve confluent output of the first electrode components and the second electrode components.

Embodiments of the present application further provide an electrical apparatus including the battery cell 6 according to any of the above embodiments, and the battery cell 6 is configured to provide electrical power for the electrical apparatus. The electrical apparatus may be any of the foregoing devices or systems that use a battery.

According to some embodiments of the present application, with reference to Fig. 3 to Fig. 5, the battery cell 6 according to the embodiments of the present application includes the housing 10, the first electrode component 20, the second electrode component 30, the first electrode terminal 40, and the second electrode terminal 50. The housing 10 includes the housing body 11 and two end caps 12, the housing body 11 has openings on two ends along the first direction X, and the two end caps 12 are configured to cover two openings, respectively. The first electrode component 20 and the second electrode component 30 are accommodated within the housing 10 and arranged along the first direction X, and the first insulating component 60 is arranged between the first electrode component 20 and the second electrode component 30. The first electrode terminal 40 includes the first positive electrode terminal 41 and the first negative electrode terminal 42 arranged on one end cap 12, the first positive electrode terminal 41 is electrically connected to the positive electrode plate of the first electrode component 20, and the first negative electrode terminal 42 is electrically connected to the negative electrode plate of the first electrode component 20, so as to lead out the electrical power generated by the first electrode component 20. The second electrode terminal 50 includes the second positive electrode terminal 51 and the second negative electrode terminal 52 arranged on the other end cap 12, the second positive electrode terminal 51 is electrically connected to the positive electrode plate of the second electrode component 30, and the second negative electrode terminal 52 is electrically connected to the negative electrode plate of the second electrode component 30, so as to lead out the electric energy generated by the second electrode component 30.

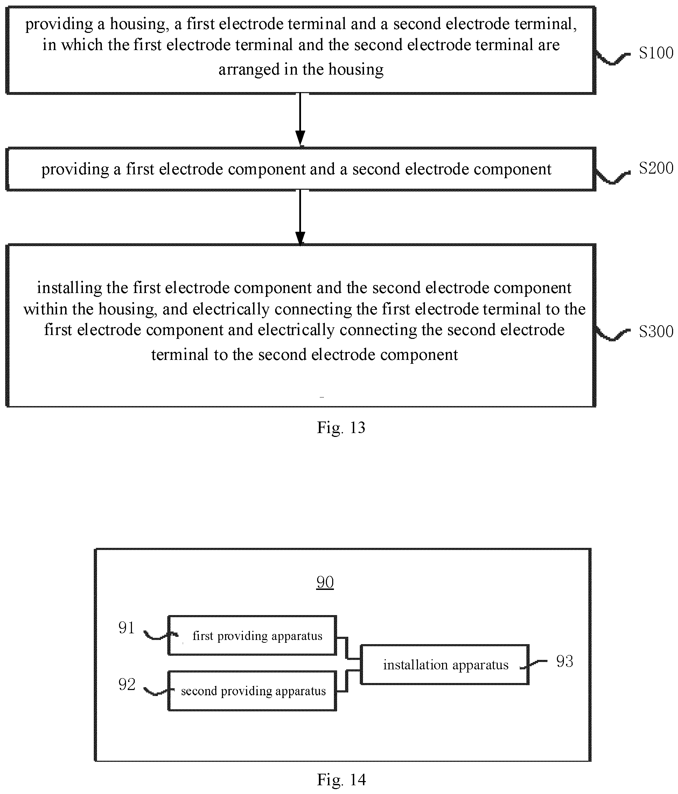

Fig. 13 is a schematic flowchart of a method for manufacturing a battery cell according to some embodiments of the present application.

As shown in Fig. 13, embodiments of the present application provide a method for manufacturing a battery cell, and the method includes:
S 100, providing a housing, a first electrode terminal and a second electrode terminal, in which the first electrode terminal and the second electrode terminal are arranged in the housing;
S200, providing a first electrode component and a second electrode component;
S200, installing the first electrode component and the second electrode component within the housing, and electrically connecting the first electrode terminal to the first electrode component and electrically connecting the second electrode terminal to the second electrode component;
in which the first electrode component and the second electrode component are arranged along a first direction and are insulated from each other, the first electrode terminal is configured to lead out electrical power from the first electrode component, and the second electrode terminal is configured to lead out electrical power from the second electrode component.

It should be noted that, for the structure of the battery cell manufactured by the above method, reference may be made to the battery cell provided in the above embodiments.

Under a condition that the battery cell is manufactured according to the above method, it is not necessary to carry out the steps in the above order, that is, the steps may be carried out in an order mentioned in the embodiments, or in an order different from that mentioned in the embodiments, or several steps may be performed simultaneously. For example, the execution of steps S100 and S200 is in no particular order, and may also be performed simultaneously.

Fig. 14 is a schematic block diagram of a system for manufacturing a battery cell according to some embodiments of the present application.

As shown in Fig. 14, embodiments of the present application provide a system 90 for manufacturing a battery cell, and the system 90 includes a first providing apparatus 91, a second providing apparatus 92, and an installation apparatus 93. The first providing apparatus 91 is configured to provide a housing, a first electrode terminal and a second electrode terminal, wherein the first electrode terminal and the second electrode terminal are arranged in the housing. The second providing apparatus 92 is configured to provide a first electrode component and a second electrode component. The installation apparatus 93 is configured to install the first electrode component and the second electrode component within the housing, electrically connect the first electrode terminal to the first electrode component and electrically connect the second electrode terminal to the second electrode component. The first electrode component and the second electrode component are arranged along a first direction and are insulated from each other, the first electrode terminal is configured to lead out electrical power from the first electrode component, and the second electrode terminal is configured to lead out electrical power from the second electrode component.

For a related structure of a battery cell manufactured by the above system for manufacturing a battery cell, reference may be made to the battery cell provided in the above embodiments.

It should be noted that the embodiments in the present application and the features of the embodiments may be combined with each other in the case of no conflict.

Finally, it should be noted that: the above embodiments are only for illustrating technical solutions of the present application, rather than for limiting; although the present application has been described in detail with reference to the foregoing embodiments, those of ordinary skill in the art should understand: it is still possible to modify the technical solutions recited in the foregoing embodiments, or perform equivalent replacements to some of the technical features thereof, however, these modifications or replacements do not make an essence of the corresponding technical solutions deviate from the spirit and scope of the technical solutions of the embodiments of the present application.

## Claims

1. A battery cell, comprising:
a housing;
a first electrode component and a second electrode component accommodated within the housing and arranged along a first direction, wherein the first electrode component is insulated from the second electrode component;
a first electrode terminal arranged on the housing and electrically connected to the first electrode component to lead out electrical power from the first electrode component; and
a second electrode terminal arranged on the housing and electrically connected to the second electrode component to lead out electrical power from the second electrode component.

2. The battery cell according to claim 1, wherein the first electrode component and the second electrode component are spaced apart along the first direction.

3. The battery cell according to claim 2, further comprising a first insulating component, wherein at least a part of the first insulating component is arranged between the first electrode component and the second electrode component, so as to insulate and separate the first electrode component from the second electrode component.

4. The battery cell according to claim 3, wherein the first insulating component is provided with a via, and the via connects a space on a side of the first insulating component facing the first electrode component to a space on a side of the first insulating component facing the second electrode component.

5. The battery cell according to claim 3 or 4, further comprising a second insulating component coated on an outer side of the first electrode component, so as to separate the first electrode component from at least a part of the housing; and
wherein the first insulating component is connected to the second insulating component.

6. The battery cell according to any of claims 1 to 5, wherein a space on an outer side of the first electrode component is connected to a space on an outer side of the second electrode component.

7. The battery cell according to any of claims 1 to 6, wherein the first electrode terminal and the second electrode terminal are installed on two ends of the housing along the first direction, respectively.

8. The battery cell according to any of claims 1 to 7, wherein the first electrode terminal comprises a first positive electrode terminal electrically connected to a positive electrode plate of the first electrode component and a first negative electrode terminal electrically connected to a negative electrode plate of the first electrode component; and
the second electrode terminal comprises a second positive electrode terminal electrically connected to a positive electrode plate of the second electrode component and a second negative electrode terminal electrically connected to a negative electrode plate of the second electrode component.

9. The battery cell according to any of claims 1 to 8, wherein a maximum size of the battery cell along the first direction is from 200mm to 2000mm.

10. The battery cell according to any of claims 1 to 9, wherein the housing comprises a housing body and two end caps, the housing body has openings on two ends along the first direction, and the two end caps are configured to cover two openings, respectively; and
the first electrode terminal and the second electrode terminal are installed on the two end caps, respectively.

11. The battery cell according to claim 10, wherein the housing body comprises two first side plates arranged oppositely along a second direction perpendicular to the first direction;
at least one of the first side plates is provided with a pressure relief mechanism, and the pressure relief mechanism is configured to be actuated under a condition that an internal pressure or temperature of the battery cell reaches a threshold, so as to relieve the internal pressure; and
along the second direction, an end portion of the first electrode component facing the second electrode component at least partially overlaps with the pressure relief mechanism, and an end portion of the second electrode component facing the first electrode component at least partially overlaps with the pressure relief mechanism.

12. The battery cell according to claim 11, wherein the housing body comprises two second side plates arranged oppositely along a third direction perpendicular to the first direction and the second direction; and
an area of the second side plate is greater than an area of the first side plate.

13. The battery cell according to any of claims 1 to 12, wherein the first direction is parallel to a length direction of the battery cell.

14. The battery cell according to any of claims 1 to 13, wherein:
the first electrode component comprises a first electrode plate and a second electrode plate wound around a winding axis parallel to the first direction; or
the first electrode component comprises a plurality of first electrode plates and a plurality of second electrode plates stacked alternately along a third direction perpendicular to the first direction; or
the first electrode component comprises a plurality of first electrode plates and a second electrode plate, the second electrode plate is continuously bent and comprises a plurality of stacked segments and a plurality of bent segments, the plurality of stacked segments and the plurality of first electrode plates are alternately stacked along a third direction perpendicular to the first direction, and each of the plurality of bent segments is configured to connect two adjacent ones of the plurality of stacked segments.

15. A battery comprising a plurality of battery cells according to any of claims 1 to 14.

16. The battery according to claim 15, further comprising:
a first busbar configured to electrically connect first electrode terminals of the plurality of battery cells;
a second busbar configured to electrically connect second electrode terminals of the plurality of battery cells; and
a third busbar configured to electrically connect the first electrode terminal of at least one of the plurality of battery cells to the second electrode terminal of the at least one of the plurality of battery cells.

17. An electrical apparatus comprising the battery cell according to any of claims 1 to 14, and the battery cell is configured to provide electrical power.

18. A method for manufacturing a battery cell, comprising:
providing a housing, a first electrode terminal and a second electrode terminal, wherein the first electrode terminal and the second electrode terminal are arranged in the housing;
providing a first electrode component and a second electrode component;
installing the first electrode component and the second electrode component within the housing, and electrically connecting the first electrode terminal to the first electrode component and electrically connecting the second electrode terminal to the second electrode component;
wherein the first electrode component and the second electrode component are arranged along a first direction and are insulated from each other, the first electrode terminal is configured to lead out electrical power from the first electrode component, and the second electrode terminal is configured to lead out electrical power from the second electrode component.

19. A system for manufacturing a battery cell, comprising:
a first providing apparatus configured to provide a housing, a first electrode terminal and a second electrode terminal, wherein the first electrode terminal and the second electrode terminal are arranged in the housing;
a second providing apparatus configured to provide a first electrode component and a second electrode component;
an installation apparatus configured to install the first electrode component and the second electrode component within the housing, electrically connect the first electrode terminal to the first electrode component and electrically connect the second electrode terminal to the second electrode component;
wherein the first electrode component and the second electrode component are arranged along a first direction and are insulated from each other, the first electrode terminal is configured to lead out electrical power from the first electrode component, and the second electrode terminal is configured to lead out electrical power from the second electrode component.
